# EUROPEAN PATENT SPECIFICATION

(11) **EP 3 769 011 B1**
(45) Date of publication and mention of the grant of the patent: **29.04.2026**
(21) Application number: 19713169.1
(22) Date of filing: 18.03.2019
(51) Int. Cl.: A21B 3/00, F24B 13/02, F24B 1/197, A47J 37/06, C10B 29/02

(54) **OVEN TILE FLOOR SYSTEM AND METHOD**
OFENFLIESENBODENSYSTEM UND VERFAHREN
SYSTÈME ET PROCÉDÉ DE PLANCHER DE CARREAUX DE FOUR

(30) Priority: 19.03.2018 GB 201804348
(43) Date of publication of application: 27.01.2021
(73) Proprietor: Gozney Group Ltd, Christchurch Dorset BH23 4FL (GB)
(72) Inventor: GOZNEY, Thomas Robert Llewelyn, Christchurch Dorset BH23 4FL (GB)
(74) Representative: Haseltine Lake Kempner LLP
(86) International application number: PCT/GB2019/050750
(87) International publication number: WO 2019/180411

(56) References cited:
- EP-A2- 1 975 335
- WO-A2-2007/103524
- CA-A- 242 937
- CA-A1- 2 796 814
- JP-A- S5 684 408
- US-A- 4 154 650

## Description

The present invention relates to an oven tile floor system and method.

Pizza oven floors are constructed using a plurality of tiles, commonly of a material having high thermal mass. The tiles of a pizza oven floor are carefully levelled on a bed of cement so as to provide a smooth, planar and stationary cooking surface.

Cast floor tiles have varying thickness caused by having an open ended tool that is hand-trowelled during the casting process.

The varying thickness of tiles combined with the varying thickness of cement that supports that tiles and retains them in place means that laying a tile floor of a pizza oven is a time-consuming and skilled task.

Ensuring that tiles of a pizza oven floor are all level is particularly important so as to avoid food debris collecting in the oven and to avoid cooking implements snagging on tile edges.

Furthermore, owing to particulate salt falling into gaps between tiles (formed as the tiles expand and contract owing to heating and cooling) damage to the pizza oven floor and consequently the overall structure of the oven can occur.

Once salt has fallen into a gap it prevents adjacent tiles from expanding into the gap as the tiles heat up, leading to expansion in other directions. In turn once a tile next to a gap contracts the gap can be widened and additional salt may fall into the gap worsening the problem.

WO 2007/103524 describes an outdoor oven adapted for use as a brick oven, a traditional gas grill, or a traditional charcoal grill. The outdoor oven includes a cooking chamber, at least one gas burner positioned below the cooking chamber, a thermostat operatively connected to the burners for controlling the temperature of the cooking chamber, means for positioning at least one removable cooking tile above the burner, a subfloor mounted to the oven housing between the burner and the cooking chamber.

Documents JP S56 84408 A, US 4 154 650 A, CA 242 937 A, CA 2 796 814 A1 and EP 1 975 335 A2 also disclose floor tiling systems.

The present invention seeks to improve upon the prior art.

According to a first aspect, there is provided an oven tile floor system in accordance with the appended independent claim 1. According to a second aspect, there is provided a method of constructing a tile floor on an oven floor surface in accordance with the appended independent claim 13. According to a third aspect, there is provided a method of using, in a pizza oven, a pizza oven tile floor system in accordance with the appended claim 14. Further optional features are provided in the appended dependent claims.

Described herein is an oven tile floor system for tiling an oven floor surface, the system comprising:
a plurality of support elements;
a plurality of tiles; wherein:
   undersides of the tiles each comprise a plurality of recesses for housing support elements, and when in use the undersides of the tiles are spaced from the surface by the support elements.

By providing a plurality of supports for tiles the tiles may be spaced a uniform distance from the surface upon which the floor is laid. Advantageously by supporting the tiles on support elements expansion and contraction of the tiles with heating and cooling of the oven is more readily accommodated.

Furthermore, by spacing tiles from the floor surface any debris (in particular salt) that may fall into a gap that appears between adjacent tiles is allowed to pass between the tiles such that it falls to rest upon the surface that is beneath the tiles. Thus, such debris does not remain stuck between adjacent tiles and does not damage the overall tile structure.

A plurality of recesses may be employed to properly locate supports under tiles and hinder or prevent movement of the supports relative to the tiles.

Preferably the recesses are arranged around a periphery of the undersides of the tiles.

When in use a plurality of recesses on adjacent tiles together house a support element.

By arranging recesses around the periphery of tiles more than one tile may be supported by a single support.

In some embodiments recesses on adjacent tiles together form a housing that substantially tessellates with a support element.

In some embodiments recesses on adjacent tiles together form a substantially snug housing for a support element.

In some embodiments recesses on adjacent tiles form a housing that provides a peripheral gap of between 1 and 5mm around a support element, or a gap of between 2 and 4mm around a support element, or a gap of around 3mm around a support element.

In some embodiments recesses are located at each corner of a tile.

By arranging recesses at the corners of tiles the maximum number of tiles may be supported by a single support.

In some embodiments recesses are located at each side of a tile.

In some embodiments a tile is substantially rectangular and comprises four recesses, or is substantially triangular and comprises three recesses.

In some embodiments a recess is substantially in the shape of a sector of a circle or is substantially in the shape of a quadrant.

In some embodiments a support element is substantially cylindrical or is substantially cuboid.

Sides of tiles are shaped such that a channel extending to the underside of the tiles is formed between adjacent tiles when adjacent tiles abut each other adjacent their upper surfaces.

In some embodiments when tiles are laid flat sides of tiles are inwardly angled to the vertical.

In some embodiments when tiles are laid flat sides of tiles are inwardly angled at between 1 and 10 degrees to the vertical, or are inwardly angles at between 2 and 8 degrees to the vertical or are inwardly angled at between 3 and 6 degrees to the vertical or are inwardly angled at between 4 and 5 degrees to the vertical.

In some embodiments respective portions of adhesive are positioned between the underside of the tiles and the surface.

In some embodiments a support comprises at least one line of weakness such that the support may be separated into halves or a support comprises two lines of weakness such that the support may be separated into quarters.

Also described herein is a tile adapted for use with the system of any preceding statement of invention relating to the first aspect of the present invention.

Also described herein is a method of constructing an oven tile floor on an oven floor surface comprising the steps of:
i) providing a system in accordance with any preceding statement of invention relating to the first aspect of the present invention;
ii) positioning a plurality of tiles adjacent each other such that the tiles rest on a plurality of support elements and are spaced from the surface.

In some embodiments the method comprises the further step of applying adhesive between the undersides of the tiles and the surface so as to attach the tiles to the surface.

In order that the present invention may be more fully understood a specific embodiment will now be described by way of example with reference to the accompanying schematic drawings, of which:
Figure 1 is a perspective view of the underside of a tile made in accordance with the present invention;
Figure 2 is a side view of the tile of Figure 1;
Figure 3 is a perspective view of the top of the tile of Figure 1;
Figure 4 is a perspective view of a support element for use with the tile of Figure 1; and
Figure 5 is a perspective view illustrating how a tile floor made in accordance with the system of the present invention is constructed.

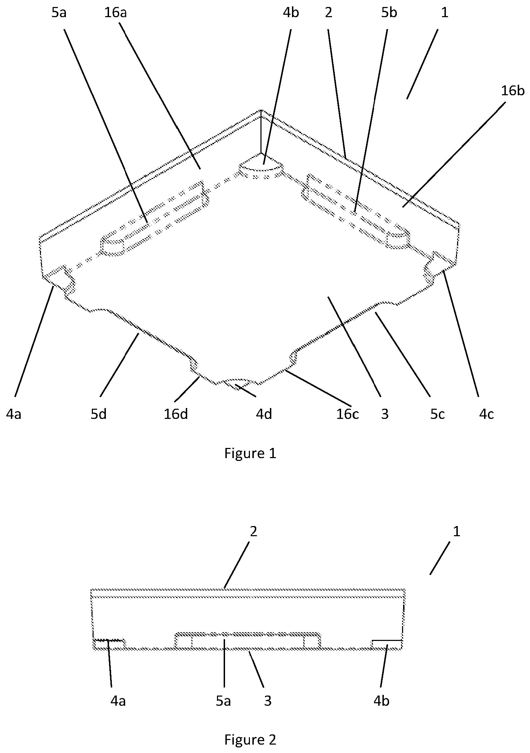

Referring to Figure 1, an oven floor tile 1 is substantially rectangular.

Tile 1 comprises a substantially planar upper side 2 and a substantially planar underside 3. When in use upper side 2 of tile 1 forms part of the surface of a floor of a pizza oven (not shown).

Tiles 1 are manufactured in a two part mould, which beneficially means that the thickness and profile of the tiles is substantially uniform. The tolerance of the dimensions of tile 1 are approximately +/- 0.2mm. Underside 3 represents the 'fill face' where material is poured into the mould.

Underside 3 comprises at its four corners four respective recesses 4a, 4b, 4c, 4d, each of which are each substantially in the shape of a quadrant. The spacing of recesses 4a, 4b, 4c, 4d, from the planar upper side 2 of tile 1 is precisely controlled during the manufacturing process. This is contrast to the uniformity of underside 3, which may be relatively rough.

Underside 3 also comprises along its four edges four respective recesses 5a, 5b, 5c, 5d, which are substantially cuboid in shape. Recesses 5a, 5b, 5c, 5d are distinct from recesses 4a, 4b, 4c, 4d. Recesses 5a, 5b, 5c, 5d are provided to assist a user in handling tile 1 when installing tile 1 in a pizza oven.

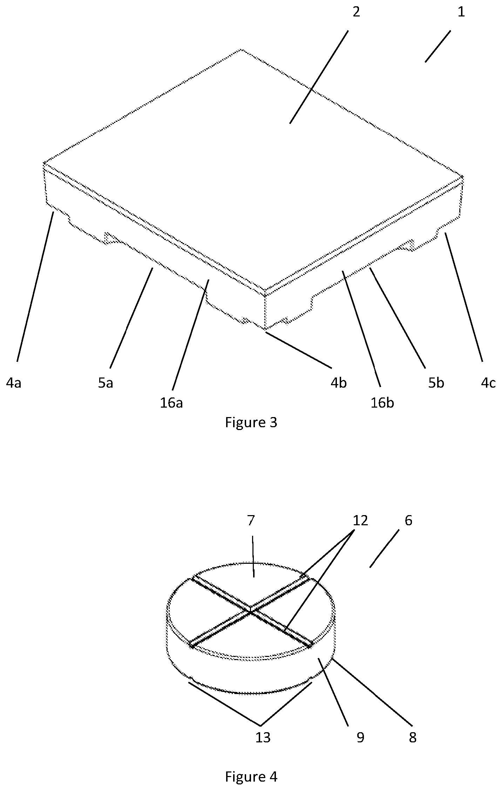

Turning to figure 4, a support 6 is substantially cylindrical having a substantially planar circular upper side 7 and a substantially planar circular underside 8 with a circular side wall 9 extending between upper side 7 and underside 8.

Support 6 is formed of a ceramic material.

The radius of support 6 substantially corresponds to the radius embodied in each of the four quadrant shaped recesses 4a, 4b, 4c, 4d.

Height of support 6, i.e. the distance along circular side wall 9 between upper side 7 and underside 8, is less than the depth of recesses 4a, 4b, 4c, 4d, such that when support 6 is housed within one of recesses 4a, 4b, 4c, 4d underside 8 of support 6 stands proud of underside 3 of tile 1.

Upper side 7 comprises two linear diametric grooves 12 in the form of a cross. Similarly underside 8 comprises two linear diametric grooves 13 in the form of a cross.

Together grooves 12 and 13 allow support 6 to be broken into two semi circular supports 11 and each semicircular support 11 further broken into two quadrant-shaped supports (not shown). A support 6 may be readily snapped into semicircles and quadrants by using a chisel or flat head screwdriver.

Supports 6 are sized such that when in use adjacent tiles 1 abut each other. Supports 6 are slightly smaller than the space formed by four quadrant shaped recesses 4a, 4b, 4c, 4d such that a peripheral gap 15 of around 2.5mm exists around support 6 when tiles 1 abut each other and support 6 is centrally housed within a cylindrical recess.

In other embodiments recesses may form a housing that provides a peripheral gap of between 1 and 5mm around a support element, or a gap of between 2 and 4mm around a support element, or a gap of around 3mm around a support element.

Provision of a small gap around support elements accommodates any movement of tiles supported thereon as the oven heats and cools.

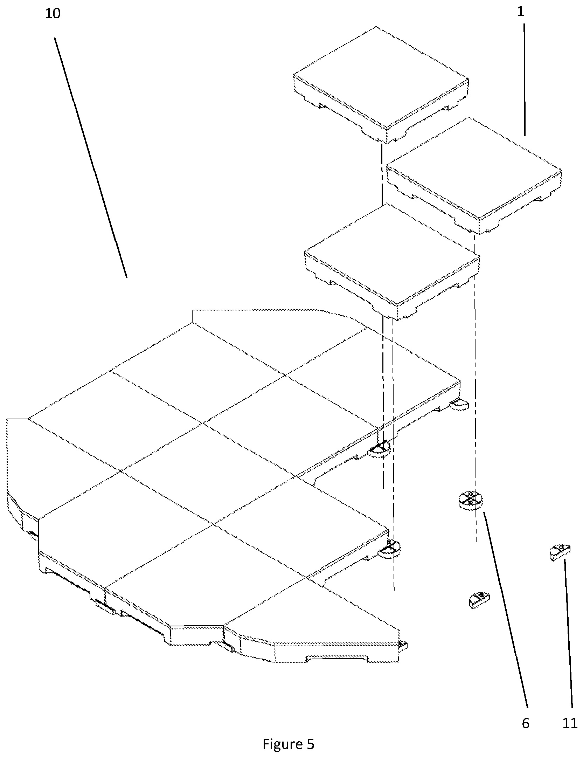

Turning to Figure 5 and an illustration of the floor system of the present invention in use, an oven floor 10 may be constructed using a plurality of tiles 1 and a plurality of supports 6.

Typically a pizza oven floor 10 is constructed on a substantially planar layer of an insulating material.

In order to construct oven floor 10 in accordance with the present invention a user rests a tile 1 upon four supports 6, which are housed within the four respective recesses 4a, 4b, 4c, 4d located at the corners of tile 1.

Adjacent tiles 1 may be laid such that a single support 6 is supporting four adjacent tiles at their corners.

When in use a tile 1 resting upon four supports 6 that are housed in respective recesses 4a, 4b, 4c, 4d is spaced from a surface upon which the four supports rest.

In this manner a suspended pizza oven floor 10 is constructed with tiles 1 being spaced from the surface upon which floor 10 is constructed by supports 6.

Tiles are held in place upon the surface by small amounts of adhesive in the form of cement (not shown) applied to the centre of the underside of tiles 1 prior to a tile 1 being laid.

Beneficially providing cement under tiles 1 also assists in supporting the weight of the tiles (as opposed to the tiles resting solely on supports 6).

Advantageously in contrast to prior art floors in the system of the present invention tiles 1 are supported by supports 6 such that tiles 1 are uniformly spaced from the surface upon which the oven floor is constructed.

Thus, tiles 1 form a continuous and smooth planar surface with the upper surfaces 2 of tiles 1 being level with the upper surfaces 2 of adjacent tiles 1.

Semicircular supports 11 may be employed to support tiles at the edge of pizza oven floor 10 and quadrant-shaped supports (not shown) may be employed at the corners of a pizza oven floor.

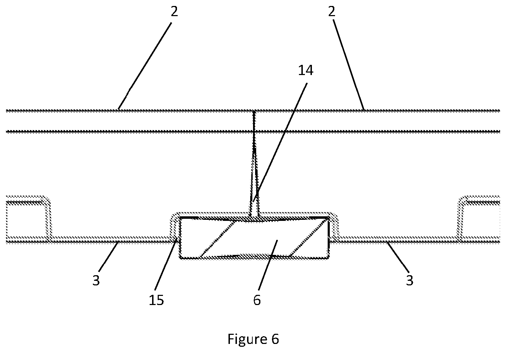

Turning to Figure 6 it may be seen that when tile 1 is laid flat edge sides 16a, 16b, 16c, 16d of tiles 1 are inwardly inclined at approximately 3 degrees to the vertical such that the upper side 2 of a tile 1 extends out above the underside 3 of tile 1. That is to say that edge sides 16a, 16b, 16c, 16d of tile 1 are angled to the plane of upper surface 2 at an angle of around 87 degrees.

Although in the present embodiment edge sides 16a, 16b, 16c, 16d are angled to the plane of upper surface 2 at an angle of around 87 degrees in other embodiments other angles may be employed. For example in other embodiment edge sides 16a, 16b, 16c, 16d may be angled to the plane of upper surface 2 by between 89 and 80 degrees, between 88 and 82 degrees, between 87 and 84 degrees or between 86 and 85 degrees.

This results in a channel 14 that is substantially in the form of a triangular prism being formed between tiles 1 when tiles 1 abut each other adjacent their upper sides 2. In a first plane channel 14 extends alongside the edge of tiles 1 and in an orthogonal plane channel 14 extends from an apex adjacent upper sides 2 of tiles 1 down to a debris outlet adjacent undersides 3 of tiles 1.

Channel 14 does not normally provide a through-channel between the upper sides 2 of tiles 12 and the undersides 3 owing to adjacent tiles normally abutting each other adjacent their upper sides. Channel 14 is normally sealed at its upper end adjacent upper sides 2 of adjacent tiles 1.

However, channel 14 is operable to remove debris from between tiles should a gap open up between adjacent tiles 1 so as to provide access to channel 14. In this instance channel 14 allows for any debris that falls between tiles 1 to drop through channel 14 such that debris rests on the surface that supports stand (instead of the debris being trapped between the tiles and thereby causing damage to the tile structure). Beneficially as channel 14 widens towards the undersides of tiles 1 debris does not become stuck between adjacent tiles as it falls.

In the present embodiment the term rectangular is intended to include a square.

It will be apparent that support-housing recesses on tiles need not be formed at corners but could be formed at the edges of tiles.

It will also be apparent that any appropriate shape of tile may be employed.

## Claims

1. An oven tile floor system for tiling an oven floor surface (10), the system comprising:
a plurality of tiles (1); and
a plurality of support elements (6, 11),
whereby undersides (3) of the tiles (1) each comprise a plurality of recesses (4a, 4b, 4c, 4d, 5a, 5b, 5c, 5d) for housing support elements (6, 11), and when in use the undersides (3) of the tiles (1) are spaced from the surface (10) by the support elements (6, 11) and a plurality of recesses (4a, 4b, 4c, 4d, 5a, 5b, 5c, 5d) on adjacent tiles (1) together house a support element (6, 11),
**characterised in that** sides (16a, 16b, 16c, 16d) of tiles (1) are shaped such that a channel (14) extending to the underside (3) of the tiles (1) is formed between adjacent tiles (1) when adjacent tiles (1) abut each other adjacent their upper surfaces.

2. The floor system of claim 1 wherein the recesses (4a, 4b, 4c, 4d, 5a, 5b, 5c, 5d) are arranged around a periphery of the undersides (3) of the tiles (1).

3. The floor system of any preceding claim wherein the recesses (4a, 4b, 4c, 4d, 5a, 5b, 5c, 5d) on adjacent tiles (1) together form a housing that substantially tessellates with a support element (6, 11).

4. The floor system of any preceding claim wherein the recesses (4a, 4b, 4c, 4d, 5a, 5b, 5c, 5d) on adjacent tiles (1) together form a substantially snug housing for a support element (6, 11).

5. The floor system of any preceding claim wherein the recesses (4a, 4b, 4c, 4d, 5a, 5b, 5c, 5d) on adjacent tiles (1) form a housing that provides a peripheral gap (15) of between 1 and 5 mm around a support element (6, 11), or a gap of between 2 and 4 mm around a support element (6, 11), or a gap of around 3 mm around a support element (6, 11).

6. The floor system of any preceding claim wherein recesses (4a, 4b, 4c, 4d, 5a, 5b, 5c, 5d) are located at each corner of a tile (1) and/or at each side of a tile (1).

7. The floor system of any preceding claim wherein a tile (1) is substantially rectangular and comprises four recesses (4a, 4b, 4c, 4d, 5a, 5b, 5c, 5d) or is substantially triangular and comprises three recesses (4a, 4b, 4c, 4d, 5a, 5b, 5c, 5d).

8. The floor system of any preceding claim wherein a recess (4a, 4b, 4c, 4d,) is substantially in the shape of a sector of a circle or is substantially in the shape of a quadrant.

9. The floor system of any preceding claim wherein a support element (6, 11) is substantially cylindrical or is substantially cuboid.

10. The floor system of any preceding claim wherein when the tiles (1) are laid flat sides (16a, 16b, 16c, 16d) of tiles (1) are inwardly angled to the vertical, optionally at between 1 and 10 degrees to the vertical, at between 2 and 8 degrees to the vertical, at between 3 and 6 degrees to the vertical, or at between 4 and 5 degrees to the vertical.

11. The floor system of any preceding claim wherein respective portions of adhesive are positioned between the underside (3) of the tiles (1) and the surface (10).

12. The floor system of any preceding claim wherein a support element (6, 11) comprises at least one line of weakness such that the support (6, 11) may be separated into halves or a support element (6, 11) comprises two lines of weakness such that the support (6, 11) may be separated into quarters.

13. A method of constructing a tile floor on an oven floor surface (10) comprising the steps of:
i) providing a system in accordance with any of claims 1 to 12;
ii) positioning a plurality of tiles (1) adjacent each other such that the tiles (1) rest on a plurality of support elements (6, 11) and are spaced from the surface (10),
and optionally further comprising:
iii) applying adhesive between the undersides (3) of the tiles (1) and the surface (10) so as to attach the tiles (1) to the surface (10).

14. A method of using, in a pizza oven, an oven tile floor constructed according to the method of claim 13.

## Patentansprüche

1. Schamotteplattenbodensystem zum Kacheln einer Ofenbodenoberfläche (10), wobei das System Folgendes umfasst:
eine Vielzahl von Schamotteplatten (1) und
eine Vielzahl von Stützelementen (6, 11),
wobei Unterseiten (3) der Schamotteplatten (1) jeweils eine Vielzahl von Aussparungen (4a, 4b, 4c, 4d, 5a, 5b, 5c, 5d) zur Aufnahme von Stützelementen (6, 11) umfassen und wobei die Unterseiten (3) der Schamotteplatten (1) im Einsatz durch die Stützelemente (6, 11) von der Oberfläche (10) beabstandet sind und eine Vielzahl von Aussparungen (4a, 4b, 4c, 4d, 5a, 5b, 5c, 5d) an benachbarten Schamotteplatten (1) zusammen ein Stützelement (6, 11) aufnehmen,
**dadurch gekennzeichnet, dass** Seiten (16a, 16b, 16c, 16d) von Schamotteplatten (1) so geformt sind, dass ein sich zu der Unterseite (3) der Schamotteplatten (1) erstreckender Kanal (14) zwischen benachbarten Schamotteplatten (1) gebildet wird, wenn benachbarte Schamotteplatten (1) benachbart zu ihren oberen Flächen aneinander anliegen.

2. Bodensystem nach Anspruch 1, wobei die Aussparungen (4a, 4b, 4c, 4d, 5a, 5b, 5c, 5d) um einen Umfang der Unterseiten (3) der Schamotteplatten (1) angeordnet sind.

3. Bodensystem nach einem der vorhergehenden Ansprüche, wobei die Aussparungen (4a, 4b, 4c, 4d, 5a, 5b, 5c, 5d) an benachbarten Schamotteplatten (1) zusammen eine Aufnahme bilden, die mit einem Stützelement (6, 11) im Wesentlichen parkettiert.

4. Bodensystem nach einem der vorhergehenden Ansprüche, wobei die Aussparungen (4a, 4b, 4c, 4d, 5a, 5b, 5c, 5d) an benachbarten Schamotteplatten (1) zusammen eine im Wesentlichen passgenaue Aufnahme für ein Stützelement (6, 11) bilden.

5. Bodensystem nach einem der vorhergehenden Ansprüche, wobei die Aussparungen (4a, 4b, 4c, 4d, 5a, 5b, 5c, 5d) an benachbarten Schamotteplatten (1) eine Aufnahme bilden, die einen Umfangsspalt (15) von zwischen 1 und 5 mm um ein Stützelement (6, 11) herum oder einen Spalt von zwischen 2 und 4 mm um ein Stützelement (6, 11) herum oder einen Spalt von etwa 3 mm um ein Stützelement (6, 11) herum bereitstellt.

6. Bodensystem nach einem der vorhergehenden Ansprüche, wobei Aussparungen (4a, 4b, 4c, 4d, 5a, 5b, 5c, 5d) an jeder Ecke einer Schamotteplatte (1) und/oder an jeder Seite einer Schamotteplatte (1) angeordnet sind.

7. Bodensystem nach einem der vorhergehenden Ansprüche, wobei eine Schamotteplatte (1) im Wesentlichen rechteckig ist und vier Aussparungen (4a, 4b, 4c, 4d, 5a, 5b, 5c, 5d) umfasst oder im Wesentlichen dreieckig ist und drei Aussparungen (4a, 4b, 4c, 4d, 5a, 5b, 5c, 5d) umfasst.

8. Bodensystem nach einem der vorhergehenden Ansprüche, wobei eine Aussparung (4a, 4b, 4c, 4d) im Wesentlichen die Form eines Kreissektors oder im Wesentlichen die Form eines Viertelkreises aufweist.

9. Bodensystem nach einem der vorhergehenden Ansprüche, wobei ein Stützelement (6, 11) im Wesentlichen zylindrisch oder im Wesentlichen quaderförmig ist.

10. Bodensystem nach einem der vorhergehenden Ansprüche, wobei Seiten (16a, 16b, 16c, 16d) der Schamotteplatten (1) nach innen zur Vertikalen abgewinkelt sind, optional zwischen 1 und 10 Grad zur Vertikalen, zwischen 2 und 8 Grad zur Vertikalen, zwischen 3 und 6 Grad zur Vertikalen oder zwischen 4 und 5 Grad zur Vertikalen, wenn die Schamotteplatten (1) flach hingelegt sind.

11. Bodensystem nach einem der vorhergehenden Ansprüche, wobei jeweilige Klebstoffportionen zwischen der Unterseite (3) der Schamotteplatten (1) und der Oberfläche (10) positioniert sind.

12. Bodensystem nach einem der vorhergehenden Ansprüche, wobei ein Stützelement (6, 11) mindestens eine Schwächungslinie umfasst, so dass die Stütze (6, 11) in Hälften getrennt werden kann, oder ein Stützelement (6, 11) zwei Schwächungslinien umfasst, so dass die Stütze (6, 11) in Viertel getrennt werden kann.

13. Verfahren zum Konstruieren eines Schamotteplattenbodens auf einer Ofenbodenoberfläche (10), umfassend die folgenden Schritte:
i) Bereitstellen eines Systems nach einem der Ansprüche 1 bis 12,
ii) Positionieren einer Vielzahl von Schamotteplatten (1) nebeneinander, so dass die Schamotteplatten (1) auf einer Vielzahl von Stützelementen (6, 11) aufliegen und von der Oberfläche (10) beabstandet sind,
und optional ferner umfassend:
iii) Auftragen von Klebstoff zwischen den Unterseiten (3) der Schamotteplatten (1) und der Oberfläche (10), um die Schamotteplatten (1) an der Oberfläche (10) zu befestigen.

14. Verfahren zur Verwendung eines nach dem Verfahren nach Anspruch 13 konstruierten Schamotteplattenbodens in einem Pizzaofen.

## Revendications

1. Système de plateau en pavés de four pour recouvrir une surface de plateau de four (10), le système comprenant :
une pluralité de pavés (1) ; et
une pluralité d'éléments de support (6, 11),
des faces inférieures (3) des pavés (1) comprenant chacune une pluralité de renfoncements (4a, 4b, 4c, 4d, 5a, 5b, 5c, 5d) destinés à recevoir des éléments de support (6, 11) et, durant l'utilisation, les faces inférieures (3) des pavés (1) étant espacées de la surface (10) par les éléments de support (6, 11) et une pluralité de renfoncements (4a, 4b, 4c, 4d, 5a, 5b, 5c, 5d) sur des pavés (1) adjacents recevant ensemble un élément de support (6, 11),
**caractérisé en ce que** des côtés (16a, 16b, 16c, 16d) des pavés (1) sont pourvus d'une forme telle qu'un canal (14) s'étendant jusqu'à la face inférieure (3) des pavés (1) soit formé entre des pavés (1) adjacents lorsque des pavés (1) adjacents sont accolés à proximité de leurs surfaces supérieures.

2. Système de plateau selon la revendication 1, dans lequel les renfoncements (4a, 4b, 4c, 4d, 5a, 5b, 5c, 5d) sont disposés autour d'une périphérie des faces inférieures (3) des pavés (1).

3. Système de plateau selon l'une quelconque des revendications précédentes, dans lequel les renfoncements (4a, 4b, 4c, 4d, 5a, 5b, 5c, 5d) sur des pavés (1) adjacents forment ensemble un réceptacle s'emboîtant sensiblement avec un élément de support (6, 11).

4. Système de plateau selon l'une quelconque des revendications précédentes, dans lequel les renfoncements (4a, 4b, 4c, 4d, 5a, 5b, 5c, 5d) sur des pavés (1) adjacents forment ensemble un réceptacle dont la forme correspond sensiblement étroitement à celle d'un élément de support (6, 11).

5. Système de plateau selon l'une quelconque des revendications précédentes, dans lequel les renfoncements (4a, 4b, 4c, 4d, 5a, 5b, 5c, 5d) sur des pavés (1) adjacents forment un réceptacle qui définit un espace périphérique (15) compris entre 1 et 5 mm autour d'un élément de support (6, 11), ou un espace compris entre 2 et 4 mm autour d'un élément de support (6, 11), ou un espace d'environ 3 mm autour d'un élément de support (6, 11).

6. Système de plateau selon l'une quelconque des revendications précédentes, dans lequel des renfoncements (4a, 4b, 4c, 4d, 5a, 5b, 5c, 5d) sont situés à chaque coin d'un pavé (1) et/ou sur chaque côté d'un pavé (1).

7. Système de plateau selon l'une quelconque des revendications précédentes, dans lequel un pavé (1) est sensiblement rectangulaire et comprend quatre renfoncements (4a, 4b, 4c, 4d, 5a, 5b, 5c, 5d) ou est sensiblement triangulaire et comprend trois renfoncements (4a, 4b, 4c, 4d, 5a, 5b, 5c, 5d).

8. Système de plateau selon l'une quelconque des revendications précédentes, dans lequel un renfoncement (4a, 4b, 4c, 4d) a sensiblement la forme d'un secteur de cercle ou a sensiblement la forme d'un quart de cercle.

9. Système de plateau selon l'une quelconque des revendications précédentes, dans lequel un élément de support (6, 11) est sensiblement cylindrique ou est sensiblement parallélépipédique.

10. Système de plateau selon l'une quelconque des revendications précédentes, dans lequel, lorsque les pavés (1) sont posés, des côtés plats (16a, 16b, 16c, 16d) des pavés (1) sont inclinés vers l'intérieur par rapport à la verticale, éventuellement entre 1 et 10 degrés par rapport à la verticale, entre 2 et 8 degrés par rapport à la verticale, entre 3 et 6 degrés par rapport à la verticale, ou entre 4 et 5 degrés par rapport à la verticale.

11. Système de plateau selon l'une quelconque des revendications précédentes, dans lequel des portions respectives d'adhésif sont positionnées entre la face inférieure (3) des pavés (1) et la surface (10).

12. Système de plateau selon l'une quelconque des revendications précédentes, dans lequel un élément de support (6, 11) comprend au moins une ligne de faiblesse de telle sorte que le support (6, 11) puisse être divisé en moitiés ou un élément de support (6, 11) comprend deux lignes de faiblesse de telle sorte que le support (6, 11) puisse être divisé en quarts.

13. Procédé de construction d'un plateau en pavés sur une surface de plateau de four (10) comprenant les étapes suivantes :
i) préparer un système selon l'une quelconque des revendications 1 à 12 ;
ii) positionner une pluralité de pavés (1) les uns à côté des autres de sorte que les pavés (1) reposent sur une pluralité d'éléments de support (6, 11) et soient espacés de la surface (10),
et comprenant éventuellement en outre :
iii) appliquer un adhésif entre les faces inférieures (3) des pavés (1) et la surface (10) de manière à fixer les pavés (1) à la surface (10).

14. Procédé d'utilisation, dans un four à pizza, d'un plateau en pavés de four construit selon le procédé de la revendication 13.
